# FASCICULE DE BREVET EUROPEEN

(11) **EP 0 588 693 B1**
(45) Date de publication et mention de la délivrance du brevet: **13.03.1996**
(21) Numéro de dépôt: 93402192.4
(22) Date de dépôt: 09.09.1993
(51) Int. Cl.: B60N 2/06, B60N 2/24

(54) **Agencement de sièges dans l'habitacle d'un véhicule automobile**
Fahrzeugsitzanordnung
Seat arrangement in a motor vehicle

(30) Priorité: 18.09.1992 FR 9211136
(43) Date de publication de la demande: 23.03.1994
(73) Titulaire: Société Anonyme dite: REGIE NATIONALE DES USINES RENAULT, F-92109 Boulogne Billancourt (FR)
(72) Inventeur: LaPorte, Alain, F-78280 Guyancourt (FR); Larsonneur, Jean-François, F-78100 Saint Germain en Laye (FR); Jamet, Jean, F-78390 Bois d'Arcy (FR)
(74) Mandataire: Ernst-Schonberg, Michel

(56) Documents cités:
- EP-A- 0 331 241
- BE-A- 899 282
- DE-A- 2 056 499
- FR-A- 1 059 809
- US-A- 1 965 048
- US-A- 2 839 312
- US-A- 3 637 253
- US-A- 4 915 438
- PATENT ABSTRACTS OF JAPAN, vol. 13, no. 305 (M-849)(3653), 13 juillet 1989; & JP-A-10 95 948 (HONDA MOTOR) 14-04-1989

## Description

L'invention concerne un agencement de sièges dans l'habitacle d'un véhicule automobile qui permet le passage à d'autres agencements sans modification préalable de l'habitacle.

L'invention concerne plus particulièrement un agencement de sièges dans lequel une première rangée frontale de deux sièges constituée par un siège de conducteur et par un siège de passager est complétée par une deuxième rangée de trois sièges.

La publication FR-A-1 059 830 décrit un agencement de trois sièges dans lequel le siège médian est situé dans l'axe du volant tandisque les sièges latéraux limitent vers l'avant un logement à bagages ou celui d'un siège escamotable.

La publication FR-A-432 037 décrit l'agencement d'un siège de secours dans un habitacle, susceptible d'occuper une position de rangement dans la paroi latérale de l'habitacle.

Les agencements précités sont sans influence sur le confort des passagers transportés.

L'invention vise à réaliser un agencement à deux rangées de sièges dans lequel les sièges de la deuxième rangée sont montés à déplacement longitudinal et transversal dans le but de réaliser les modifications de position et de confort des passagers dans l'habitacle du véhicule.

L'invention vise en outre à réaliser un agencement à deux rangées de sièges dans lequel les sièges latéraux de la deuxième rangée sont montés à déplacement transversal tandis que le siège médian est monté à déplacement longitudinal dans le but d'accroître l'habitabilité et le confort des passagers transportés.

Selon l'invention, il est prévu un agencement de sièges dans l'habitacle d'un véhicule automobile dont une rangée de trois sièges possède deux sièges latéraux montés à déplacement transversal et respectivement adossés à une portion de paroi transversale limitée par la paroi transversale correspondante du compartiment à bagages, chaque siège latéral portant un moyen de coulissement transversal et un moyen de coulissement longitudinal de mise en correspondance dudit siège avec des accoudoirs tandis que le siège médian est monté à coulissement en direction du compartiment à bagages.

Le siège latéral est adossé à une portion de paroi transversale de la carrosserie dont l'étendue est limitée par la paroi latérale du compartiment à bagages et obture le logement d'un accoudoir relevable.

D'autres caractéristiques de l'invention ressortent des revendications dépendantes.

D'autres avantages de l'agencement apparaîtront à la lecture de la description qui va suivre, faite en référence au dessin annexé dans lequel :
- la figure 1 est une représentation schématique vue en plan de l'agencement à deux rangées de sièges,
- la figure 2 est une représentation schématique vue en plan de l'agencement dérivé,
- la figure 3 est une représentation schématique vue en élévation d'un siège latéral monté à coulissement transversal et longitudinal,
- la figure 4 est une représentation schématique d'un siège de secours dans le plan transversal IV de la figure 2.

Suivant les dessins, le véhicule automobile est constitué par un châssis porté par les roues avant 1 et par les roues arrière 2. Au châssis est intégré un habitacle 3 enveloppé par des panneaux d'une carrosserie 5.

Le plancher 6 de l'habitacle porte de manière usuelle :
- une rangée de sièges avant constituée par un siège conducteur 7 et par un siège passager.
- une rangée de sièges arrière constituée par un siège médian 8 et par deux sièges latéraux 9a, 9b.

Les sièges latéraux 9a, 9b sont respectivement adossés à une portion de paroi transversale 10 constitutive du passage d'une roue arrière 2.

La paroi 10 est limitée transversalement par la paroi longitudinale latérale 13 du compartiment à bagages 14.

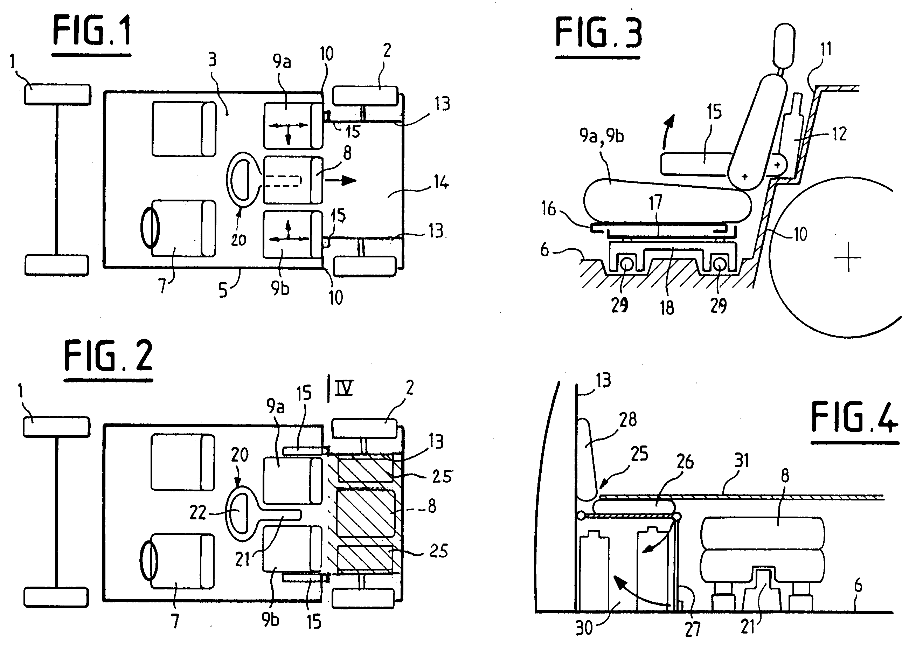

Selon une caractéristique de l'agencement, la paroi 10 porte un évidement 11 destiné au rangement d'objets 12 et susceptible de recevoir un élément accoudoir 15 latéral du siège tel que 9a ou 9b. Chaque siège latéral 9a, 9b est monté à coulissement longitudinal. A cet effet il est fixé aux profils supérieurs d'un jeu de glissières conventionnelles constituées par un profil supérieur mobile 16 et par un profil inférieur 17. Le profil 17 est rigidement relié à une base support mobile 18 montée à coulissement transversal le long de guides transversaux 29 fixés au plancher 6 ainsi que cela est montré à la figure 3.

Le siège médian 8 est monté à coulissement en direction du compartiment à bagages 14 et chevauche partiellement l'accoudoir d'un module central 20 ainsi que cela est montré à la figure 1.

Lorsque le siège médian 8 est reculé, pour occuper par exemple une position de rangement dans le compartiment à bagages 14, conformément à la figure 2, les sièges latéraux 9a, 9b peuvent être rapprochés du plan longitudinal médian du véhicule et légèrement reculés pour permettre la mise en service du module central 20 constitué à titre d'exemple par l'accoudoir déployable 21 et par un écran de vision 22.

Dans l'arrangement de siège représenté aux figures 2 et 4, le siège médian 8 occupe une position de rangement dans laquelle le dossier du siège a été préalablement rabattu sur l'assise.

Le siège médian 8 en position repliée et rangée, représenté à la figure 2 est disposé à proximité de deux sièges de secours 25 respectivement adossés aux deux parois 13 du compartiment à bagages. Ainsi que cela est montré à la figure 4, chaque siège 25 possède une assise 26 articulée à la paroi 13 et supportée par un pied repliable 27 en appui sur le plancher 6. Le dossier du siège 25 est réalisé par un capitonnage 28 de la paroi 13. Lorsque le siège 25 est en service, l'assise 26 surplombe un rangement 30 à bagages.

Ainsi que cela est montré à la figure 4, les sièges de secours 25 peuvent supporter une tablette supplémentaire de chargement 31 cache-bagages qui dissimule également le chargement éventuel du plancher 6.

## Revendications

1. Agencement de sièges dans l'habitacle d'un véhicule automobile dont une rangée de trois sièges (8, 9a, 9b) possède deux sièges latéraux (9a, 9b) montés à déplacement transversal et respectivement adossés à une portion de paroi transversale (10) limitée par la paroi latérale correspondante (13) du compartiment à bagages (14), chaque siège latéral (9a, 9b) portant un moyen de coulissement transversal (18) et un moyen de coulissement longitudinal de mise en correspondance dudit siège avec des accoudoirs (15) tandis que le siège médian (8) est monté à coulissement en direction du compartiment à bagages (14).

2. Agencement de sièges selon la revendication 1, caractérisé par le fait que le siège médian est disposé à proximité d'un siège de secours (25) adossé à la paroi latérale (13) du compartiment à bagages (14) dont l'assise (26) surplombe un rangement (30) à bagages.

3. Agencement de sièges selon la revendication 2, caractérisé par le fait que le siège de secours (25) porte une tablette (31) cache bagages.

4. Agencement de sièges selon l'une quelconque des revendications 1 à 3, caractérisé par le fait que le siège médian (8) chevauche en partie un élément accoudoir (21) déployable associé à un écran de vision (22).

5. Agencement selon la revendication 1, caractérisé par le fait que le siège latéral (9a, 9b) est monté à déplacement sur un profil de glissière (17) fixée à un support (18) mobile transversalement le long de guides (29) solidaires du plancher (6) du véhicule.

## Claims

1. Arrangement of seats in the passenger compartment of an automotive vehicle, one row of three seats (8, 9a, 9b) of which has two side seats (9a, 9b) mounted so that they are transversely displaceable and respectively backing onto a section of the transverse wall (10) delimited by the corresponding lateral wall (13) of the luggage compartment (14), each side seat (9a, 9b) being provided with a means for sliding transversely (18) and a means for sliding longitudinally in order to align said seat with arm rests (15), whereas the middle seat (8) is mounted so that it slides in the direction of the luggage compartment (14).

2. Arrangement of seats according to claim 1, characterised by the fact that the middle seat is disposed in the proximity of a safety seat (25) backing onto the lateral wall (13) of the luggage compartment (14), the squab (26) of which overhangs a luggage stowage space (30).

3. Arrangement of seats according to claim 2, characterised by the fact that the safety seat (25) supports a panel (31) for covering luggage.

4. Arrangement of seats according to any one of claims 1 to 3, characterised by the fact that the middle seat (8) partly overlaps a folding armrest element (21) combined with a viewing screen (22).

5. Arrangement according to claim 1, characterised by the fact that the lateral seat (9a, 9b) is mounted so that is displaceable on a profiled slide section (17) fixed to a support (18) moveable transversely along guides (29) integral with the floor (6) of the vehicle.

## Patentansprüche

1. Anordnung von Sitzen im Fahrgastraum eines Kraftfahrzeuges, wobei eine Reihe von drei Sitzen (8, 9a, 9b) zwei seitliche Sitze (9a, 9b) aufweist, die in Querrichtung verschiebbar und jeweils an einen Seitenwandabschnitt (10) anlehnbar sind, der begrenzt ist durch die zugehörige Seitenwand (13) eines Kofferraums (14) und wobei jeder seitliche Sitz (9a, 9b) mit einer Anordnung (18) zur Querverschiebung und mit einer Anordnung zur Längsverschiebung versehen ist, um den Sitz zu seitlichen Stützen (15) hin auszurichten, während der mittlere Sitz (8) in Richtung zum Kofferraum (14) hin verschiebbar angeordnet ist.

2. Anordnung von Sitzen nach Anspruch 1, dadurch gekennzeichnet, daß der mittlere Sitz in der Nähe eines Hilfssitzes 25 angeordnet ist, der sich an die Seitenwand (13) des Kofferraums (14) anlehnt, und dessen Sitzfläche (26) eingeladenes Gepäck (30) überragt.

3. Anordnung von Sitzen nach Anspruch 2, dadurch gekennzeichnet, daß der Hilfssitz (25) eine Gepäckabdeckplatte (31) aufnimmt.

4. Anordnung von Sitzen nach einem der Ansprüche 1 bis 3, dadurch gekennzeichnet, daß der mittlere Sitz 8 einen Teil eines verschwenkbaren Anschlages (21) abdeckt, der mit einem Bildschirm (22) verbunden ist.

5. Anordnung nach Anspruch 1, dadurch gekennzeichnet, daß der seitliche Sitz (9a, 9b) verschiebbar auf einem Gleitschienenträger (17) angeordnet ist, welcher an einer Halterung (18) befestigt ist, die in seitlicher Richtung entlang Führungen (29) verschiebbar ist, die mit dem Boden (6) des Fahrzeugs verbunden sind.
